# EUROPÄISCHE PATENTANMELDUNG

(11) **EP 1 119 066 A2**
(43) Veröffentlichungstag der Anmeldung: **25.07.2001**
(21) Anmeldenummer: 00125637.9
(22) Anmeldetag: 23.11.2000
(51) Int. Cl.: H01M 8/06, B01J 8/06, B01J 8/02, C01B 3/58

(54) **Vorrichtung zur Behandlung eines Mediums in einem Reaktor mit einem katalysatorhaltigen Reaktionsraum**

(30) Priorität: 19.01.2000 DE 10002024
(71) Anmelder: XCELLSIS GmbH, 73230 Kirchheim/Teck-Nabern (DE)
(72) Erfinder: Bachinger, Patrick, 73252 Lenningen (DE); Boneberg, Stefan, 72660 Beuren (DE); Heil, Dietmar, 88477 Schwendi (DE); Keppeler, Berthold, Dr., 73230 Kirchheim/Teck (DE); Schonert, Michael, 70374 Stuttgart (DE)
(74) Vertreter: Kocher, Klaus-Peter Dipl.-Phys

(57) **Zusammenfassung**

Die Erfindung betrifft eine Vorrichtung zur Behandlung eines Mediums in einem Brennstoffzellensystem mit einem Reaktor mit einem katalysatorhaltigen Bereich zwischen einem ersten Teilraum des Reaktors und einem zweiten Teilraum des Reaktors, wobei der katalysatorhaltige Bereich im Strömungsweg des Mediums angeordnet und vom Medium durchströmt ist, wobei der erste Teilraum von dem zweiten Teilraum zumindest bereichsweise umgeben ist, der katalysatorhaltige Bereich als Begrenzungswand zwischen dem ersten, inneren Teilraum und dem zweiten, äußeren Teilraum angeordnet ist und die Begrenzungswand durch ein mit Katalysatormaterial versehenes Vlies gebildet ist.

## Beschreibung

Die Erfindung betrifft eine Vorrichtung zur Behandlung eines Mediums in einem Reaktor mit einem katalysatorhaltigen Reaktionsraum gemäß dem Oberbegriff des unabhängigen Anspruchs.

Aus der DE 195 26 886 C1 ist ein Rohrbündelreaktor bekannt, der zur Methanolreformierung eingesetzt wird. Dort wird ein Medium, z.B. ein Gasgemisch, durch katalysatorhaltige Rohre geleitet und dabei katalytisch umgesetzt. Dabei sind mehrere Rohre parallel zueinander angeordnet, um eine möglichst hohe Umsetzung des Mediums zu erreichen. Das Katalysator ist üblicherweise als Schüttgut in einem derartigen Reaktor angeordnet.

Der Erfindung liegt die Aufgabe zugrunde, eine Vorrichtung mit einem katalysatorhaltigen Reaktionsraum zu schaffen, die kompakt, einfach, platzsparend und kostengünstig zu realisieren ist.

Diese Aufgabe wird bei einer gattungsgemäßen Vorrichtung gemäß Anspruch 1 durch die Merkmale im kennzeichnenden Teil des Anspruchs gelöst.

Ein erfindungsgemäßer Reaktor weist einen katalysatorhaltigen Bereich zwischen einem ersten, inneren Teilraum und einen zweiten, äußeren Teilraum auf, wobei der erste Teilraum von dem zweiten Teilraum zumindest bereichsweise umgeben ist, der katalysatorhaltige Bereich durch ein mit Katalysatormaterial versehenes Vlies gebildet ist und das Vlies in dem vom zweiten Teilraum umgebenen Bereich eine Begrenzungswand zwischen dem ersten, inneren Teilraum und dem zweiten, äußeren Teilraum bildet. Bevorzugt ist das Vlies ein metallisches Vlies, besonders bevorzugt aus Stahl.

Die erfindungsgemäße Vorrichtung ist sehr kompakt, und ist einfach herzustellen. Sie hat eine geringe. Masse und ist kostengünstig.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
Fig. 1 eine schematische Ausführungsform eines bevorzugten Reaktors mit einer Vlieswicklung,
Fig. 2 a, b, c schematische Ausführungsformen weiterer bevorzugter Reaktoren mit einem Vlies mit vergrößerter Oberfläche und
Fig. 3 eine bevorzugte Ausführung eines Reaktors.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein erfindungsgemäßer Reaktor wird durch einen ersten Teilraum 2 und einen zweiten Teilraum 3 gebildet, welche durch eine Begrenzungswand 6 getrennt sind. Die Begrenzungswand 6 ist porös und im Strömungsweg des Mediums angeordnet. Das Medium strömt in den einen Teilraum hinein, tritt durch die Begrenzungswand, wird dort katalytisch umgesetzt und tritt dann in den anderen Teilraum hinein und wird aus dem Reaktor 1 abgeführt. Die Teilräume 2, 3 können im einfachsten Fall Rohre sein, die koaxial angeordnet sind. Sie können einen beliebigen Querschnitt aufweisen.

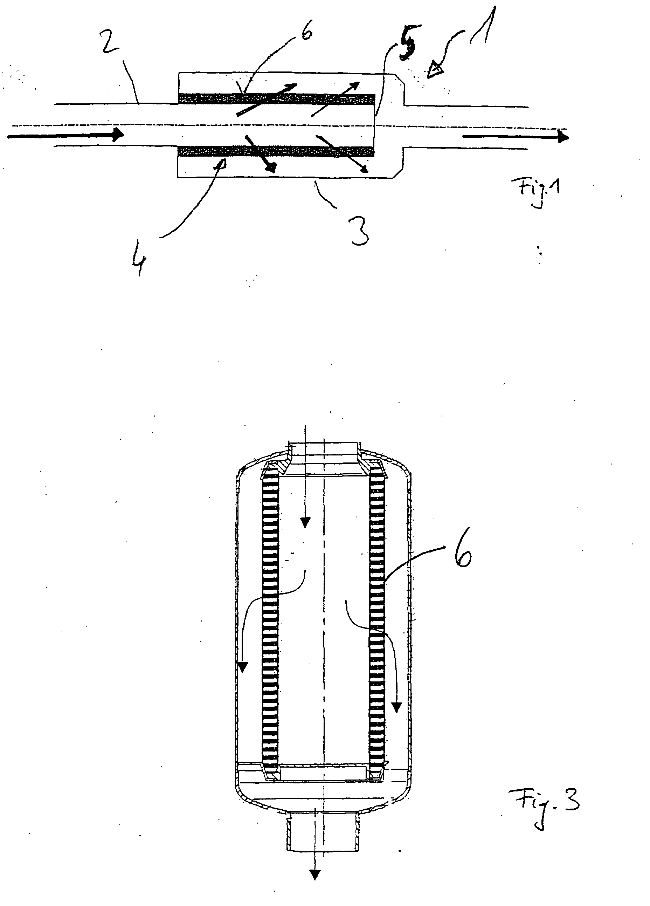

Dies ist in Fig. 1 dargestellt. Ein erstes Rohr als erster Teilraum 2 und ein zweites Rohr als zweiter Teilraum 3 eines Reaktors 1 sind koaxial zueinander angeordnet. Das erste Rohr 2 ragt in das zweite Rohr 3 hinein und ist an dem hineinragenden Rohrstück 4 einseitig mit einem Verschluß 5 gegenüber dem zweiten Rohr 3 verschlossen.

Das in das zweite Rohr 3 hineinragende Rohrstück 4 weist eine Wandung 6 auf, die durch einen katalysatorhaltigen, porösen Körper gebildet ist. Vorzugsweise besteht die Wandung 6 aus einem gewickelten, bevorzugt metallischen Vlies, welches mit Katalysatormaterial beschichtet ist. Es ist auch möglich, einen porösen Körper ist aus einem Keramik-Hohlteil zu bilden. Die Wandung 6 ist im Strömungsweg eines in das innere Rohr einströmenden Mediums angeordnet und wird von diesem im wesentlichen radial durchströmt. Beim Durchqueren der porösen Wandung 6 wird das Medium katalytisch umgesetzt bzw. verändert. Eine Medienströmung ist durch Pfeile angedeutet.

Das Medium tritt in das innere Rohr 2 ein, durchsetzt die poröse Wandung 6 und verläßt den Reaktor 1 durch das äußere Rohr 3. Die Strömung kann jedoch auch umgekehrt von außen nach innen sein.

Ein bevorzugter poröser Körper zur Bildung einer porösen Wandung 6 ist ein Vlies. Ein Vlies kann gewebeartig sein und aus Fasern, die miteinander vermengt oder verwoben sind oder aus Netzen gebildet sein oder auch aus einem porösen Schaum bestehen. Vorteilhaft ist, daß solche Vliese formbar sind und ihre Gestalt besonders einfach gewünschten Geometrien nachgebildet werden kann. Besonders günstig ist, daß Vliese einfach mit Katalysätormaterial zu beschichten sind.

Die verwendeten Vliese sollten zweckmäßigerweise eine hohe Porosität mit geringer Faserstärke aufweisen. Vorteilhaft sind Vliese aus Metall, zweckmäßigerweise aus Stahl, deren einzelne Fasern versintert sind. Dies ist günstig für die Haftung des Katalysatormaterials auf den Fasern. Als Beschichtungsverfahren kommen verschiedene an sich bekannte Verfahren in Betracht, wie Tauchen, Aufsprühen etc.

Ein bevorzugter poröser Körper weist Poren mit einem mittleren Durchmesser von höchstens 1 mm, bevorzugt weniger als 500 Um auf. Die Umsetzung des Mediums ist bei gröberer Porenstruktur weniger zufriedenstellend als mit feinerer Porenstruktur. Eine untere vorteilhafte Porengröße ergibt sich z.B. aus einem noch zu tolerierendem Druckverlust über dem porösen Körper.

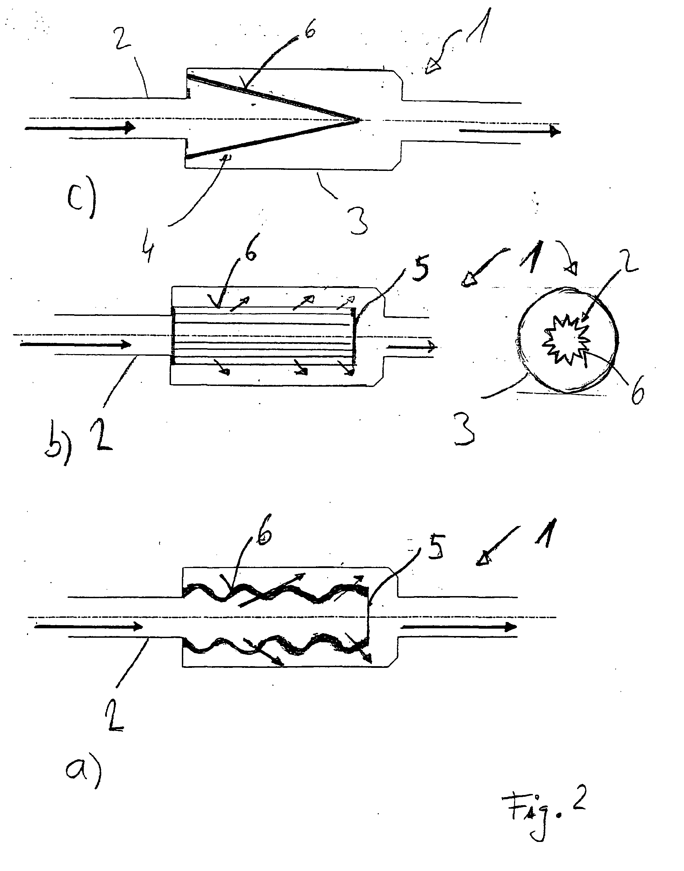

In Fig. 2 sind weitere Ausbildungen bevorzugter Reaktoren 1 dargestellt. Gegenüber dem bevorzugten Reaktor in Fig. 1 unterscheiden sich diese in einer vergrößerten Oberfläche der Wandung 6. Vergleichbare Elemente sind mit denselben Bezugszeichen wie in Fig. 1 bezeichnet.

In Fig. 2a weist die im wesentlichen zylinderförmige Wandung 6 in Form eines Vlieses in etwa eine Wellenform auf, bei der Wellenberge und Wellentäler senkrecht zur Längserstreckung der Rohre ausgebuchtet sind. In gestreckter Form wäre die Länge des Vlieses größer als in gewellter oder gefalteter Form. Damit ist die katalytische Oberfläche bei einem wellenförmigen Vlies bei gleicher Länge des Rohrstücks 4 größer ist als beim Reaktor gemäß Fig. 1, in dem ein im wesentlichen glattes Vlies aufgewickelt ist, um eine Begrenzungswand 6 des inneren Rohrs 2 zu bilden.

In Fig. 2b ist eine weitere bevorzugte Anordnung dargestellt, bei der das Vlies, bzw. die Wandung 6, in der Art einer Filterkerze ausgebildet ist. Die Wandung 6 ist im wesentlichen zylinderförmig. Neben der seitlichen Schnittansicht ist auch eine Draufsicht dargestellt, die die Faltung des Vlieses verdeutlichen soll. Das Vlies ist so gefaltet, daß der Umfang in ungefaltetem Zustand erheblich größer als in ungefaltetem Zustand.

In Fig. 2c ist eine weitere bevorzugte Ausführung dargestellt, bei der die Wandung 6 kegelförmig ausgebildet ist und sich in Strömungsrichtung des Mediums verjüngt. Die Wandung 6 kann dabei glatt sein wie in Fig. 1 oder in der Art einer Filterkerze nach Fig. 2b gestaltet oder gewellt sein wie in Fig. 2a.

Anstatt der gewickelten Vliese ist es auch möglich, Vliese als Waben-Monolith auszubilden, wobei Waben abwechselnd einseitig verschlossen sind. Dadurch ist eine hohe Porosität der Wandung 6 gewährleistet.

In Fig. 3 ist ein besonders bevorzugter Reaktor 1 dargestellt, der zur Verbrennung von Restmethanol im Abgas eines katalytischen Brenners in einem Brennstoffzellensystem verwendet wird. Das Abgas soll dabei möglichst vollständig umgesetzt werden.

Das umzusetzende Abgas strömt in das Reaktorinnere. Im Abgas befinden sich üblicherweise unverbrannte Kohlenwassestoffe sowie Kohlenwasserstoffe aus Verbrennungsprodukten im Abgas. Unter Verwendung des im Abgas vorhandenen Sauerstoffs sollen die Kohlenwasserstoffe im Reaktor katalytisch verbrannt werden. Dies geschieht, wenn das Abgas durch die poröse Wandung 6 in den äußeren Umfangsbereich des Reaktorbehälters dringt. In der Wandung 6 findet die katalytische Behandlung des Abgases statt. Das gereinigte Abgas wird dann aus dem äußeren Umfang des Reaktorbehälters abgeleitet.

Die erfindungsgemäße Vorrichtung ist eine sehr kompakte Anordnung. Sie hat eine geringe Masse und ist daher besonders für Anwendungen günstig, bei denen eine hohe Dynamik und gute Kaltstarteigenschaften gefordert ist, etwa bei Brennstoffzellensystemen.

Die Vliese wiederum sind einfach zu beschichten und weisen eine gute Katalysatorhaftung auf, die durch eine Versinterung der Fasern des Vlieses noch verbessert werden kann. Gleichzeitig sind sie sowohl vor als auch nach der Beschichtung gut zu verformen, so daß sie einfach als Begrenzungswand des inneren Rohrs einzubauen sind.

Bei der bevorzugten Verwendung des Reaktors als katalytischer Brenner zur Abgasreinigung in einem Brennstoffzellensystem zeigt sich bezogen auf die eingesetzte Katalysatormenge ein höherer Kohlenwasserstoffumsatz als bei Monolithen oder Schüttgutreaktoren. Auch sind bezogen auf den Kohlenwasserstoffumsatz die Strömungsverluste geringer als in einem Schüttgutreaktor.

Die Gefahr von unerwünschten Bypass-Medienströmen ist geringer als bei Monolithen oder Schüttgutreaktoren.

Die Effizienz der eingesetzten Katalysatormasse ist verbessert, verbunden mit einer hohen Betriebsdauer des Reaktors.

Die erfindungsgemäße Vorrichtung kann auch für andere Reaktorarten im Brennstoffzellensystem eingesetzt werden. Ein bevorzugter Reaktor ist eine CO-Oxidationsstufe zur selektiven CO-Entfernung in einem wasserstoffhaltigen Gasgemischstrom. Ein weiterer bevorzugter Reaktor ist ein Reformierungsreaktor zur Reformierung eines wasserstoffhaltigen Mediums. Dazu kann es zweckmäßig sein, zusätzliches Katalysatormaterial im Strömungsweg des Mediums, etwa im inneren Rohr und/oder auch im äußeren Rohr anzuordnen.

## Patentansprüche

1. Vorrichtung zur Behandlung eines Mediums in einem Brennstoffzellensystem mit einem Reaktor (1) mit einem katalysatorhaltigen Bereich zwischen einem ersten Teilraum (2) des Reaktors (1) und einem zweiten Teilraum (3) des Reaktors (1), wobei der katalysatorhaltige Bereich im Strömungsweg des Mediums angeordnet und vom Medium durchströmt ist,
dadurch gekennzeichnet,
daß der erste Teilraum (2) von dem zweiten Teilraum (3) zumindest bereichsweise umgeben ist,
daß der katalysatorhaltige Bereich als Begrenzungswand (6) zwischen dem ersten, inneren Teilraum (2) und dem zweiten, äußeren Teilraum (3) angeordnet ist und
daß die Begrenzungswand (6) durch ein mit Katalysatormaterial versehenes Vlies gebildet ist.

2. Vorrichtung nach Anspruch 1,
dadurch gekennzeichnet,
daß der innere Teilraum (2) und der äußere Teilraum (3) durch zwei koaxial angeordnete Rohre gebildet sind, wobei das innere Rohr am Ende des in das äußere Rohr hineinragenden Rohrstücks (4) gegen das äußere Rohr verschlossen ist und zumindest ein Teil des Umfangs des hineinragenden Rohrstücks (4) durch das Vlies gebildet wird.

3. Vorrichtung nach Anspruch 1,
dadurch gekennzeichnet,
daß der innere Teilraum (2) und der äußere Teilraum (3) koaxial zueinander angeordnet sind, wobei das innere Rohr am in das äußere Rohr hineinragenden Rohrstück (4) kegelförmig ausgebildet ist und zumindest ein Teil des Umfangs des hineinragenden Rohrstücks (4) durch das Vlies gebildet wird.

4. Vorrichtung nach Anspruch 1,
dadurch gekennzeichnet,
daß der innere Teilraum (2) die Zuführung des Mediums in den Reaktor (1) bildet.

5. Vorrichtung nach Anspruch 2,
dadurch gekennzeichnet,
daß das Vlies gefaltet und/oder wellenförmig ausgebildet ist.

6. Vorrichtung nach Anspruch 1,
dadurch gekennzeichnet,
daß das Vlies als Wabenmonolith mit einseitig verschlossenen Waben mit zumindest zwei übereinander angeordneten Vlieslagen ausgebildet ist, so daß die Waben versetzt zueinander angeordnet sind.

7. Vorrichtung nach Anspruch 1,
dadurch gekennzeichnet,
daß im inneren Teilraum (2) zusätzlich Katalysatormaterial angeordnet ist.

8. Verwendung der Vorrichtung nach Anspruch 1 in einem katalytischen Brenner zur Abgasreinigung.

9. Verwendung der Vorrichtung nach Anspruch 1 in einer CO-Oxidationsstufe zur selektiven CO-Entfernung in einem wasserstoffhaltigen Gasgemischstrom.

10. Verwendung der Vorrichtung nach Anspruch 1 in einem Reformierungsreaktor zur Reformierung eines wasserstoffhaltigen Mediums.
